# EUROPEAN PATENT APPLICATION

(11) **EP 3 989 315 A1**
(43) Date of publication of application: **27.04.2022**
(21) Application number: 19934845.9
(22) Date of filing: 27.09.2019
(51) Int. Cl.: H01M 4/36, H01M 4/505

(54) **MOF DERIVATIVE-COATED NCM TERNARY POSITIVE ELECTRODE MATERIAL AND PREPARATION METHOD THEREFOR**

(30) Priority: 24.06.2019 CN 201910546606
(71) Applicant: Tianneng Saft Energy Joint Stock Company, Changxing County Huzhou Zhejiang 313100 (CN)
(72) Inventor: SUN, Wei, Huzhou, Zhejiang 313100 (CN); ZHAO, Haimin, Huzhou, Zhejiang 313100 (CN); SHI, Liyong, Huzhou, Zhejiang 313100 (CN); HE, Wenxiang, Huzhou, Zhejiang 313100 (CN); ZHOU, Cuifang, Huzhou, Zhejiang 313100 (CN); GUO, Xin, Huzhou, Zhejiang 313100 (CN); XIANG, Debo, Huzhou, Zhejiang 313100 (CN); LI, Mingjun, Huzhou, Zhejiang 313100 (CN)
(74) Representative: karo IP
(86) International application number: PCT/CN2019/108344
(87) International publication number: WO 2020/258554

(57) **Abstract**

The present invention discloses a MOFs derivative coated NCM ternary cathode material and a preparation method thereof, which relates to a technical field of lithium ion battery. The preparation method includes: (1) preparing a metal organic framework compound of a transition metal with catalytic properties. (2) calcining the metal organic framework compound of step (1) in an inert gas to generate a MOFs derivative. (3) ball mill mixing the MOFs derivative and a nickel-cobalt-manganese ternary material to prepare a MOFs derivative coated NCM ternary cathode material. The present invention uses the MOFs of a transition metal with catalytic properties, the MOFs can catalyze the ligand part of materials into carbon nanotubes and conductive carbon materials to obtain MOFs derivative with metal nanoparticles and carbon nanotube cage. Then the MOFs derivative is coated on the surface of the nickel-cobalt-manganese ternary positive electrode material by a dry blending method. The coating method is unique and novel, and the effect is obvious, the electrochemical performance of the cathode material is significantly improved.

## Description

### Technical Field

The present invention relates to a technical field of **lithium ion battery,** in particular to a MOFs **derivative coated** NCM ternary cathode material and a preparation method thereof.

### Background Technology

The main materials of lithium-ion batteries include electrolytes, separators, positive and negative materials, and so on. The positive materials occupy a large proportion (a mass ratio of the positive and negative materials is 3: 1 to 4: 1), and the performance of the positive materials directly affects the performance of the lithium ion battery. Currently marketed positive materials for lithium batteries include lithium cobalt oxide, lithium manganate, lithium iron phosphate, and NCM ( Nickel-Cobalt-Manganese ) oxide materials. Lithium nickel cobalt manganese oxide materials has drawn much more attention in the research of lithium-ion batteries. It has many advantages such as high specific capacity, good cycle performance and thermal stability, low cost, and good safety. It is an ideal lithium Ion battery positive material.

As a modification method to improve the electrochemical properties of the nickel-cobalt-manganese ternary cathode material NCM, surface coating is the most common and simplest method, so it is also widely used by the industry. For example, using various oxides to coat the surface of the NCM material to form a physical protective layer to reduce the side reactions caused by the direct contact between the material and the electrolyte, and it can also react with the HF generated by the side reactions in the battery to reduce its effect, and reduce corrosion of the surface of the material (for example, Journal of Alloys and Compounds 709, pages 708-716). In addition, carbon coatings are also used in many electrode materials. Carbon materials are an excellent electronic conductor. Coated on the surface of electrode materials can improve the conductivity of the material interface, thereby improving the rate performance of the battery (such as Journal of Power Sources vol. 171, pages 917-921).

However, the above-mentioned single-component coating layer has a single function, and cannot improve the battery performance of the material more comprehensively. Among them, oxide as an insulator material limits its full play in improving the performance of positive materials. In addition, in the common carbon material coating strategy, a process of calcining the carbonized carbon source material at a high temperature under an inert environment is required. This process is easy to produce C/CO and other reductive substances, which can easily cause the lack of lattice oxygen of the NCM ternary cathode material, which affects the crystal structure of the material, and then affects the electrochemical activity of the material. Therefore, it is difficult to obtain an ideal carbon coated NCM cathode material.

### Summary of The Invention

The purpose of the present invention is to provide a method for preparing MOF (metal organic framework) derivative coated NCM ternary cathode material to overcome an influence on a crystal structure of the ternary cathode material, which is caused by a reduction of carbon in a high temperature calcination carbonization process existing in the prior art. Another object of the present invention is to provide a metal nanoparticle carbon nanotube cage coated NCM material, to improve the rate performance and cycle stability of the material.

In order to achieve the above objectives, the present invention adopts the following technical solutions:
A MOFs derivative coated NCM ternary cathode material, including the following steps:
(1) preparing a metal organic framework compound of a transition metal with catalytic properties.
(2) calcining the metal organic framework compound of step (1) in an inert gas to generate a MOFs derivative.
(3) ball mill mixing the MOFs derivative and a nickel-cobalt-manganese ternary material to prepare a MOFs derivative coated NCM ternary cathode material.

The MOFs of a transition metal with catalytic properties are specifically selected, the present invention utilizes the characteristics of MOFs derivative, the MOFs catalyze the ligand part of materials into carbon nanotubes and conductive carbon materials to obtain MOFs derivative with metal nanoparticles and carbon nanotube cage structures at high temperatures. Then the MOFs derivative is mixed with the micron spherical ternary positive electrode material to cover the surface of the positive electrode material. The nano metal particles in the MOF derivative contribute to the conduction of lithium ions, and the structure of the surrounding carbon nanotubes can improve the conductivity of the material surface and improve the rate performance of the battery.

In addition, in the preparation method of the present invention, after being calcined, MOFs are used as a coating material, and are directly wrapped on the surface of the spherical ternary cathode material by a dry mixing method, which avoids changes in the surface lattice of the ternary cathode material caused by the reduction of carbon of calcination in the prior art MOFs and the ternary cathode material after being mixed.

In step (1), a metal organic framework is synthesized by using a salt solution of a transition metal with catalytic properties and a ligand under certain solvent conditions.

The transition metal is selected from one or more of cobalt, nickel, iron, and manganese.

The metal organic framework compounds (MOFs) of the transition metal with catalytic properties can be ZIF-67, Fe-ZIF, Ni-ZIF, Co-BTC, Ni-BTC, Co-ZIF-67@Zn-ZIF-8, and its particle size is 50 nm-500 nm.

Preferably, cobalt is used as the transition metal, which has a better catalytic property.

In step (2), the metal organic framework compound of the transition metal with catalytic properties is calcined to obtain MOFs derivative with metal nanoparticles and carbon nanotube cage structures. The calcination conditions are a key to the preparation of the metal nanoparticle carbon nanotube structure.

Preferably, the inert gas is argon or a mixture of argon and hydrogen, and the reducing gas is one or more of hydrogen and ammonia.

A temperature of the calcining is 400-1000 °C, a time of the calcining is 1 h-10 h. Preferably, the temperature of the calcining is 500°C, the time of the calcining is 8 h.

In step (3), the MOFs derivative is coated with the surface of the NCM ternary positive electrode material by a dry mixing method.

A molecular formula of the nickel-cobalt-manganese ternary material is Li (NiₓCo_{y}Mn_{1-x-y})O₂, 0<x<1, 0<y<1. The molar ratio of nickel to cobalt to manganese is 6:2:2, 5:2:3, 4:4:2 or 1:1:1

A particle size of the NCM ternary cathode material is 5-20 µm.

Preferably, a mixing mass ratio of MOFs derivatives and nickel-cobalt-manganese ternary materials is 1-10:100.

Preferably, a method of ball milling is dry ball milling.

To ensure uniform coating, preferably, the mixing rate of the ball mill is 500 r/min.

The present invention also provides a MOFs derivative coated NCM ternary cathode material prepared by the above preparation method.

The present invention also provides a lithium ion battery, comprising a positive electrode, the positive electrode contains the MOFs derivative coated NCM ternary cathode material.

The beneficial effects of the present invention:
(1) In the preparation method provided by the present invention, MOFs derivative is prepared by calcining first, and then the MOFs derivative is coated on the surface of the nickel-cobalt-manganese ternary cathode material by a dry blending method, which effectively avoids a lack of lattice oxygen in the nickel-cobalt-manganese ternary cathode material caused by carbon reducibility during the high-temperature calcination process, the lack of lattice oxygen in the nickel-cobalt-manganese ternary cathode material affects the crystal structure of the material. The coating method is unique and novel, and the effect is obvious, which provides a new idea for the coating strategy of the ternary cathode material.
(2) The present invention uses the MOFs of a transition metal with catalytic properties, the MOFs can catalyze the ligand part of materials into carbon nanotubes and conductive carbon materials to obtain MOFs derivative with metal nanoparticles and carbon nanotube cage. The nano metal particles in the MOF derivative contribute to the conduction of lithium ions, and the structure of the surrounding carbon nanotubes can improve the conductivity of the material surface and improve the rate performance of the battery.

### Brief Description of the Drawings

Fig. 1 is a TEM image of the MOF derivative obtained in Example 1 of the present invention.
Fig. 2 is a SEM image of the MOF derivative coated nickel-cobalt-manganese ternary cathode material obtained in Example 1 of the present invention.
Fig. 3 is a TEM image of the MOF derivative coated nickel-cobalt-manganese ternary cathode material obtained in Example 1 of the present invention.
Fig. 4 is an SEM image of the MOF **derivative coated** nickel-cobalt-manganese ternary cathode material obtained in Example 3 of the present invention.
Fig. 5 is a battery assembled from the MOF **derivative coated** nickel-cobalt-manganese ternary cathode material obtained in Example 1 and Example 2 of the present invention and the uncoated cathode material of the comparative example at 0.5C, 1C, 2C, 5, 10C Performance graph under magnification conditions.

### Detailed Description of the Embodiments

The present invention will be further described below in conjunction with specific embodiments, but the present invention is not limited thereto.

### Example 1

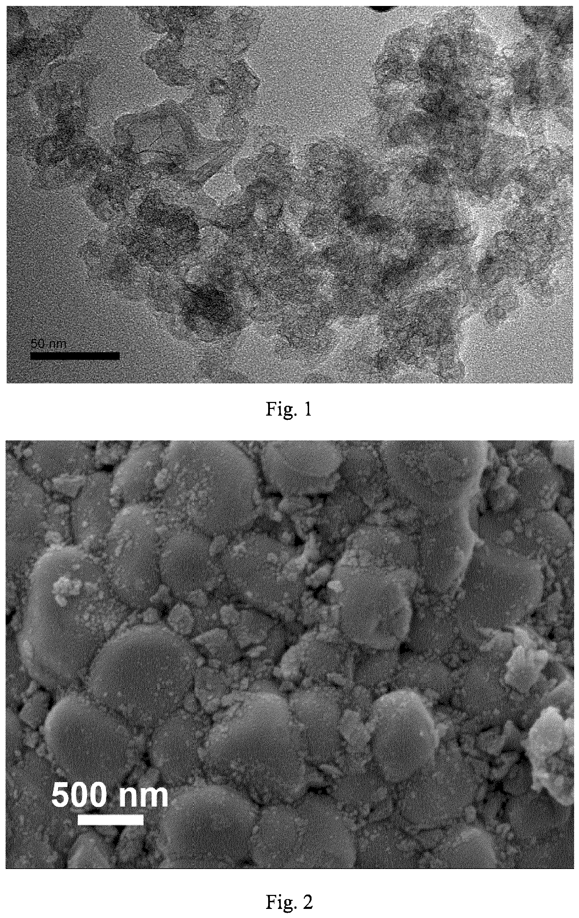

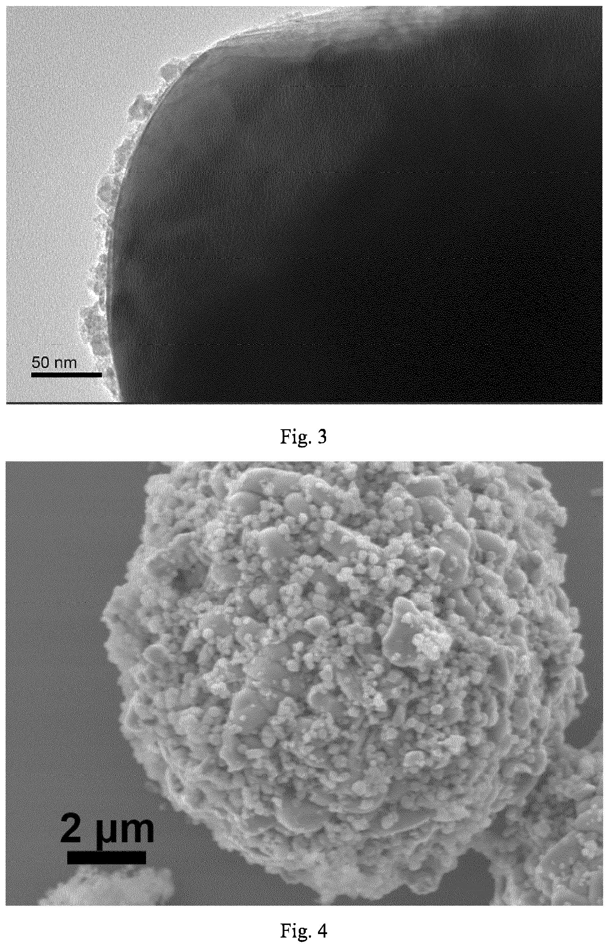

A MOF derivative coated nickel-cobalt-manganese ternary cathode material, and its preparation method is as follows:
Step 1. Synthesis of small size ZIF-67: 0.291 g (1.0 mmol) of cobalt nitrate hexahydrate was dissolved in 25.0 mL of methanol to form a pink solution I, 0.328 g (4.0 mmol) of 2-methylimidazole was dissolved in 25.0 mL Solution II was formed in methanol, 20 µL of triethylamine was added dropwise to solution II, and after thorough stirring to dissolve, solution II was brought into cobalt nitrate solution I, the resulting mixture was stirred at room temperature for 24 hours, and the purple solid was collected by centrifugation and washed with methanol three times, drying in the air at 70°C for 6 hours to obtain purple powder ZIF-67.
Step 2. Putting the ZIF-67 synthesized in the previous step into a tube furnace, in an argon-hydrogen mixture, heating at a rate of 2 °C /min, and heating at 500 °C for 8 h to obtain MOF derivative, cobalt nanoparticles, carbon Nanotube cage. Fig. 1 is a TEM image of the obtained MOF derivative.
Step 3. 2 g of NCM622 ternary cathode material and 0.02 g of MOF derivative were taken into the ball milling tank, and performing ball milling at a rate of 500 r/min to obtain the final product, denoted as #1. Fig. 2 and Fig. 3 are respectively the SEM image and TEM image of the obtained MOF derivative coated nickel-cobalt-manganese ternary cathode material.

### Example 2

A MOF derivative coated nickel-cobalt-manganese ternary cathode material, and its preparation method is as follows:
Step 1. Synthesis of small size ZIF-67: 0.291 g (1.0 mmol) of cobalt nitrate hexahydrate was dissolved in 25.0 mL of methanol to form a pink solution I, 0.328 g (4.0 mmol) of 2-methylimidazole was dissolved in 25.0 mL Solution II was formed in methanol, 20 µL of triethylamine was added dropwise to solution II, and after thorough stirring to dissolve, solution II was brought into cobalt nitrate solution I, the resulting mixture was stirred at room temperature for 24 hours, and the purple solid was collected by centrifugation and washed with methanol three times, drying in the air at 70°C for 6 hours to obtain purple powder ZIF-67.
Step 2. Putting the ZIF-67 synthesized in the previous step into a tube furnace, in an argon-hydrogen mixture, heating at a rate of 2 °C /min, and heating at 500 °C for 8 h to obtain MOF derivative, cobalt nanoparticles, carbon Nanotube cage.
Step 3. 2 g of NCM622 ternary cathode material and 0.05 g of MOF derivative were taken into the ball milling tank, and performing ball milling at a rate of 500 r/min to obtain the final product, denoted as #5.

### Example 3

A MOF derivative coated nickel-cobalt-manganese ternary cathode material, and its preparation method is as follows:
Step 1. Synthesis of big size ZIF-67: 0.291 g (1.0 mmol) of cobalt nitrate hexahydrate was dissolved in 25.0 mL of methanol to form a pink solution I, 0.328 g (4.0 mmol) of 2-methylimidazole was dissolved in 25.0 mL Solution II was formed in methanol, solution II was brought into cobalt nitrate solution I, the resulting mixture was stirred at room temperature for 24 hours, and the purple solid was collected by centrifugation and washed with methanol three times, drying in the air at 70°C for 6 hours to obtain purple powder ZIF-67.
Step 2. Putting the ZIF-67 synthesized in the previous step into a tube furnace, in an argon-hydrogen mixture, heating at a rate of 2 °C /min, and heating at 500 °C for 8 h to obtain MOF derivative, cobalt nanoparticles, carbon Nanotube cage.
Step 3. 2 g of NCM622 ternary cathode material and 0.02 g of MOF derivative were taken into the ball milling tank, and performing ball milling at a rate of 500 r/min to obtain the final product, denoted as #3. Fig. 4 is the SEM image of the obtained MOF derivative coated nickel-cobalt-manganese ternary cathode material.

### Comparison

The uncoated ternary positive electrode powder NCM622 material was characterized and denoted as #.

### Application example

Battery assembly and performance test:
The prepared positive electrode material powder, conductive carbon black super P and binder polyvinylidene fluoride (PVDF) were taken to manually grind uniformly according to the mass ratio of 85:10:5. A certain amount of 1-methyl-2-pyrrolidone (NMP) was added and stirred evenly with a mixer. a flat coater for blade coating was used, and the thickness of the blade coating was set to 0.02 mm (before drying). Drying for five hours at 80°C, and then putting it in a vacuum oven at 100°C overnight. The electrode sheet was cut out with a diameter of 11.7 mm, and then was put into an argon box to assemble the battery in order. After the assembly was completed, let it age for one day and then test.

Test method: The battery was tested on the Land battery test system with 5V-5 mA or 5V-10 mA. The test method was based on the current density of 1C=180 mA/g, and the charge and discharge experiment were carried out in an electrochemical window of 2.8-4.3 V; And the charge and discharge cycle were completed by using 0.5 C, 1 C, 2 C, 5 C, 10 C different rate.

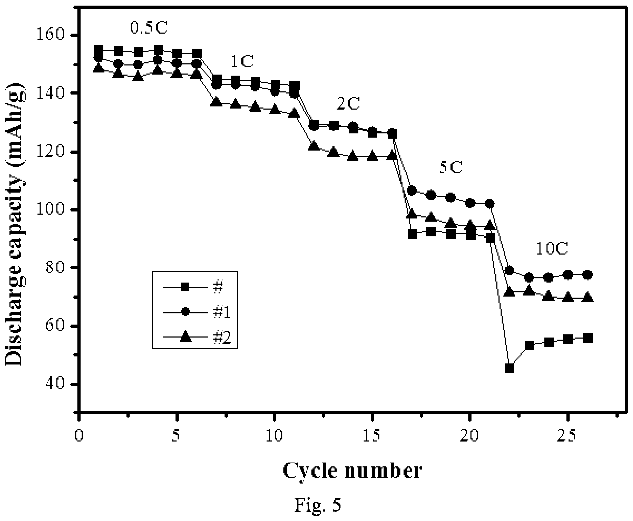

As shown in Fig. 5, the coated material shows more excellent performance at different rate. Especially at higher rates of 5 C and 10 C, the specific capacity of MOF derivative coated materials is significantly higher than that of uncoated materials.

The above expressions are only the preferred modes of the present invention. It should be pointed out that for those of ordinary skill in the art, without departing from the inventive concept of the present invention, several modifications and improvements can be made, and these should also be regarded as the present invention within the scope of protection.

## Claims

1. A preparation method of the MOFs derivative coated NCM ternary cathode material, **characterized in that**, including the following steps:
(1) preparing a metal organic framework compound of a transition metal with catalytic properties.
(2) calcining the metal organic framework compound of step (1) in an inert gas to generate a MOFs derivative.
(3) ball mill mixing the MOFs derivative and a nickel-cobalt-manganese ternary material to prepare a MOFs derivative coated NCM ternary cathode material.

2. The preparation method of the MOFs derivative coated NCM ternary cathode material according to claim 1, **characterized in that**, in step (1), the transition metal is selected from one or more of cobalt, nickel, iron, and manganese.

3. The preparation method of the MOFs derivative coated NCM ternary cathode material according to claim 1, **characterized in that**, in step (2), the inert gas is argon or a mixture of argon and hydrogen, and the reducing gas is one or more of hydrogen and ammonia.

4. The preparation method of the MOFs derivative coated NCM ternary cathode material according to claim 1, **characterized in that**, in step (2), a temperature of the calcining is 400-1000 °C, a time of the calcining is 1 h-10 h.

5. The preparation method of the MOFs derivative coated NCM ternary cathode material according to claim 1, **characterized in that**, in step (3), a molecular formula of the nickel-cobalt-manganese ternary material is Li (NiₓCo_{y}Mn_{1-x-y}) O₂, 0<x<1, 0<y<1.

6. The preparation method of the MOFs derivative coated NCM ternary cathode material according to claim 1, **characterized in that**, a mixing mass ratio of MOFs derivatives and nickel-cobalt-manganese ternary materials is 1-10:100.

7. The preparation method of the MOFs derivative coated NCM ternary cathode material according to claim 1, **characterized in that**, in step (3), the mixing rate of the ball mill is 500 r/min.

8. A MOFs derivative coated NCM ternary cathode material prepared by the preparation method of any one of claims 1-7.

9. A lithium ion battery, comprising a positive electrode, **characterized in that**, the positive electrode contains the MOFs derivative coated NCM ternary cathode material according to claims 8.
